# EUROPÄISCHE PATENTSCHRIFT

(11) **EP 0 775 333 B1**
(45) Veröffentlichungstag und Bekanntmachung des Hinweises auf die Patenterteilung: **05.06.2002**
(21) Anmeldenummer: 95925695.9
(22) Anmeldetag: 14.07.1995
(51) Int. Cl.: G05B 19/05

(54) **PROGRAMMIERGERÄT**
PROGRAMMING DEVICE
UNITE DE PROGRAMMATION

(30) Priorität: 01.08.1994 DE 4427183
(43) Veröffentlichungstag der Anmeldung: 28.05.1997
(73) Patentinhaber: SIEMENS AKTIENGESELLSCHAFT, 80333 München (DE)
(72) Erfinder: HALLWIRTH, Volker, D-78112 St. Georgen (DE)
(86) Internationale Anmeldenummer: DE9500938
(87) Internationale Veröffentlichungsnummer: WO9604594

(56) Entgegenhaltungen:
- WO-A-91/19237
- ELEKTRONIK, Bd. 40, Nr. 21, XP 000246073 HABEL M ET AL 'HOCHSPRACHE STATT MASCHINENSPRACHE SPS-COMPILER UNTERSTUETZT PROZESSDATENERFASSUNG AUCH BEI KLEINSTEUERUNGEN'
- ELEKTRONIK, Bd. 42, Nr. 8, 20.April 1993 Seiten 44-48, XP 000363838 SUESS G 'SPRACHNORM BRINGT STEUERUNG IN SCHWUNG EINBINDUNG DER INTERNATIONALEN NORM IEC 1131-3 IN EINE SPS'

## Beschreibung

Die Erfindung betrifft ein Verfahren zum Programmieren einer speicherprogrammierbare Zustandssteuerung gemäß dem Oberbegriff des Anspruchs 1 sowie ein Programmiergerät gemäß dem Oberbegriff des Anspruchs 5.

Aus der DE-OS 37 43 438 ist eine Einrichtung bekannt, die nach Maßgabe eines Momentanzustandes und einer Eingangsvektorbelegung digitaler Prozesseingangsgrößen einen Übergang in einen Folgezustand und eine Übergabe neuer Steuerdaten an eine Ausgangsstufe bewirkt. Dabei ist eine Steuerdatei vorgesehen, welche in der Einrichtung hinterlegt ist und in der die Eingangsgrößen bzw. die Kombinationen dieser Eingangsgrößen vorgegeben sind, welche für den jeweiligen Momentanzustand relevant sind.
In der DE-OS 42 26 456 ist eine speicherprogrammierbare Zustandssteuerung beschrieben, die einen Zustandsübergang von einem Momentanzustand in einen Folgezustand für mehrere Prozessoren ermöglicht.
Mit dieser Zustandssteuerung bzw. bekannten Einrichtung werden Reaktionszeiten auf Änderungen der Eingangsdaten im Vergleich zu einer gewöhnlichen speicherprogrammierbaren Steuerung wesentlich verkürzt, die während des Steuerbetriebs einzelne Anweisungen des Steuerungsprogramms entsprechend einer Bearbeitung mit einer Von-Neumann-Maschine aus einem Speicher nach und nach ausliest, diese interpretiert und schließlich die entsprechenden Operationen ausführt.

Aus der Druckschrift "Automatisieren mit SIMATIC S5-155U", Hans Berger, 1989, ist ein Programmiergerät bekannt, das zum Umsetzen einer Steueraufgabe in ein Steuerungsprogramm für ein Automatisierungsgerät vorgesehen ist. Alle Funktionen der Steueraufgabe werden programmiert oder mit einer Darstellungsart "Anweisungsliste", "Funktionsplan" oder "Kontaktplan" beschrieben. Das Programmiergerät setzt die programmierten Funktionen unabhängig von den Darstellungsarten in einen entsprechenden Maschinencode um. Dieser Code enthält alle vom Anwender programmierten Steuerungsfunktionen und wird vom Automatisierungsgerät gelesen und interpretiert, nachdem der Code in das Automatisierungsgerät übertragen wurde. Mit diesem bekannten Programmiergerät ist es nur möglich, ein Steuerungsprogramm für eine speicherprogrammierbare Zustandssteuerung mit hohem Programmieraufwand zu erstellen.

In der DE-OS 42 35 342 ist ein Programmiergerät für eine speicherprogrammierbare Zustandssteuerung beschrieben. Das Programmiergerät weist einen Speicher auf, in welchem eine mit einem Software-Werkzeug erstellte Steueraufgabe in Form eines auf einer Anzeigevorrichtung darstellbaren Aktionszeitdiagramms hinterlegt ist, das Ein- und Ausgangssignale eines zu steuernden technischen Prozesses in Form binärer und/oder analoger Signale beschreibt. Das Aktionszeitdiagramm wird durch das Software-Werkzeug zur Erstellung eines Steuerund Zustandscodes aufweisenden Steuerungsprogramms zur Lösung der Steueraufgabe, ausgehend von einem Momentanzustand, durch geeignete Auswertung von Pegelübergängen der Signale bearbeitet, und es werden entsprechende Eingangs-, Steuer- und Zustandscodes des Steuerungsprogramms für die Zustandssteuerung erstellt. Die Kenntnis einer Programmiersprache oder der in der Automatisierungstechnik üblichen Darstellungsarten für eine Steueraufgabe ist nicht erforderlich.

In der deutschen Patentanmeldung P 44 18 623.1 ist ein Programmiergerät vorgeschlagen, welches geeignet ist, eine speicherprogrammierbare Zustandssteuerung mit einem strukturierten Text zu programmieren. Der strukturierte Text ist in mehrere Teilstrukturen gegliedert, welche jeweils einem Zustand zugeordnet sind. Jede Teilstruktur weist ein erstes Schlüsselwort mit einer einen Zustand kennzeichnenden Zeichenfolge auf, welcher mindestens eine Gruppe aus geordneten Paaren folgt, die jeweils aus einem Schlüsselwort und einer Textfolge bestehen. Ein erstes Paar weist ein zweites Schlüsselwort und mindestens einen Eingangsvektor in Form einer Zeichenfolge auf, der ein zweites Paar folgt, das aus einem dritten Schlüsselwort und einem Folgezustand in Form einer weiteren Zeichenfolge besteht. Falls es zur Lösung der Steueraufgabe erforderlich ist, müssen die Teilstrukturen ein drittes und viertes Paar aufweisen, von denen das dritte Paar mit einem vierten Schlüsselwort und mindestens einem Ausgangsvektor in Form einer Zeichenfolge versehen ist und das vierte Paar ein fünftes Schlüsselwort und mindestens einen durch eine Zeichenfolge gekennzeichneten Funktionsaufruf umfasst. Ein derartiger strukturierter Text ist einfach zu formulieren und ermöglicht eine übersichtliche Darstellung der Steueraufgabe.

Aus der WO-A-91/19237 ist ein Programmiergerät zum Programmieren einer speicherprogrammierbaren Zustandssteuerung bekannt. In einem Speicher ist eine mit einem Software-Werkzeug erstellte Steueraufgabe in Form eines auf einer Anzeigevorrichtung darstellbaren Zustandsgraphen hinterlegt, welcher Symbole für Zustände, Eigangs- und Ausgangstransitionen aufweist.

Der vorliegenden Erfindung liegt die Aufgabe zugrunde, ein Verfahren der eingangs genannten Art mit einer graphischen Programmieroberfläche anzugeben, welches die Programmierung einer speicherprogrammierbaren Zustandssteuerung ermöglicht. Darüber hinaus ist Programmiergerät anzugeben, das zur Programmierung einer speicherprogrammierbaren Zustandssteuerung geeignet ist.

Im Hinblick auf das Verfahren wird diese Aufgabe gelöst durch die im kennzeichnenden Teil des Anspruchs 1 angegebenen Maßnahmen, im Hinblick auf das Programmiergerät durch die im kennzeichnenden Teil des Anspruchs 5 angegebenen Maßnahmen.

Ein Programmierer formuliert eine Steueraufgabe in Form eines Zustandsgraphen, welcher Symbole für die Zustände sowie für die Ein- und Ausgangstransitionen aufweist. Aus diesen Symbolen erzeugt das Software-Werkzeug einen strukturierten Text, aus dem - wie in der deutschen Patentanmeldung P 44 18 623.1 beschrieben - ein geeignetes Software-Werkzeug in Form eines Compilers und Linkers eine in der Zustandssteuerung ablauffähige Steuertabelle erstellt.

Weitere vorteilhafte Ausgestaltungen der Erfindung ergeben sich aus den Unteransprüchen.

Anhand der Zeichnung, in der ein Ausführungsbeispiel der Erfindung veranschaulicht ist, werden die Erfindung, deren Ausgestaltungen und Vorteile näher erläutert.

Es zeigen
- Figur 1: schematisch eine von einer speicherprogrammierbaren Zustandssteuerung gesteuerte Anlage,
- Figur 2: einen Zustandsgraphen,
- Figur 3: einen strukturierten Text,
- Figur 4 bis 8: Belegungen von Ein- und Ausgangssignalen, von Funktionsaufrufen sowie von Ein- und Ausgangstransitionen und
- Figur 9: ein Steuerungsprogramm für die speicherprogrammierbare Zustandssteuerung.

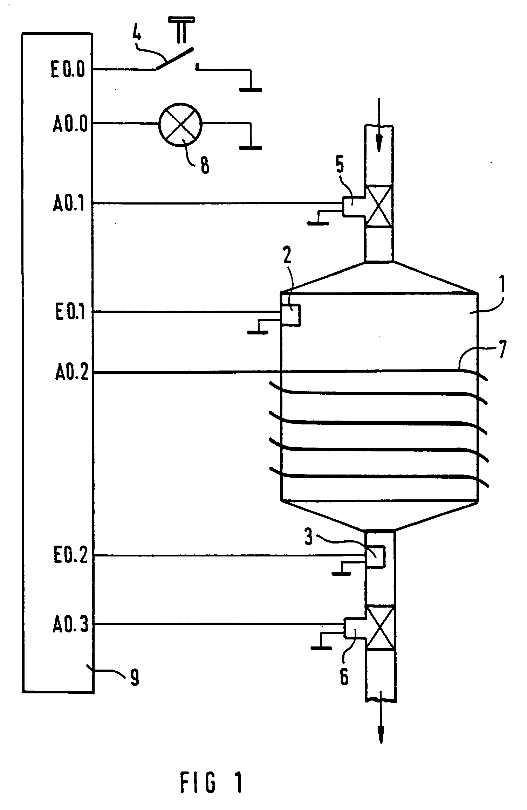

In Figur 1 ist mit 9 eine speicherprogrammierbare Zustandssteuerung bezeichnet, die einen Reaktor 1 aufgrund von Eingangssignalen E0.0, E0.1 und E0.2 steuert. Dabei zeigt das Eingangssignal E0.0 an, daß ein Reaktorzyklus durch einen Taster 4 gestartet ist, und die von Sensoren 2, 3 erzeugten Eingangssignale E0.1, E0.2, daß der Reaktor voll bzw. leer ist. Ein Ausgangssignal A0.0 wird einer Alarmlampe 8 zugeführt und zeigt den Beginn des Reaktorzyklus an. Ausgangssignale A0.1, A0.3 werden Ventilen 5, 6 zum Steuern des Zu- und Ablaufs einer Reaktorflüssigkeit aufgeschaltet, und ein Ausgangssignal A0.2 bewirkt das Heizen des Reaktors 1 durch eine Heizung 7.
Eine Steueraufgabe schreibt nun vor, daß ein Reaktorzyklus durch den Taster 4 zu starten und durch die Alarmlampe 8 anzuzeigen ist. 600 Millisekunden nach dem Startvorgang ist das Zulaufventil 5 des leeren Reaktors 1 zu öffnen, das Ablaufventil 6 muß während eines Füllvorgangs geschlossen sein. Weiterhin schreibt die Steueraufgabe vor, daß das Zulaufventil 5 geschlossen werden muß, falls der Reaktor voll ist, und daß der Flüssigkeit im Reaktor 1 für die Dauer von fünf Minuten Wärmeenergie über die Heizung 7 zuzuführen ist. Anschließend ist eine Reaktionszeit von drei Minuten vorgesehen, während dieser die Flüssigkeit auf die Wärmezufuhr reagiert. Sind die drei Minuten abgelaufen, ist der Reaktor zu entleeren. Dazu bleibt das Zulaufventil 5 geschlossen und das Ablaufventil 6 wird geöffnet. Wenn der Reaktor 1 leer ist, wird nach einer Erholungszeit von 30 Sekunden die Alarmlampe 8 ausgeschaltet und damit angezeigt, daß der Reaktorzyklus beendet ist und ein neuer Zyklus gestartet werden kann.

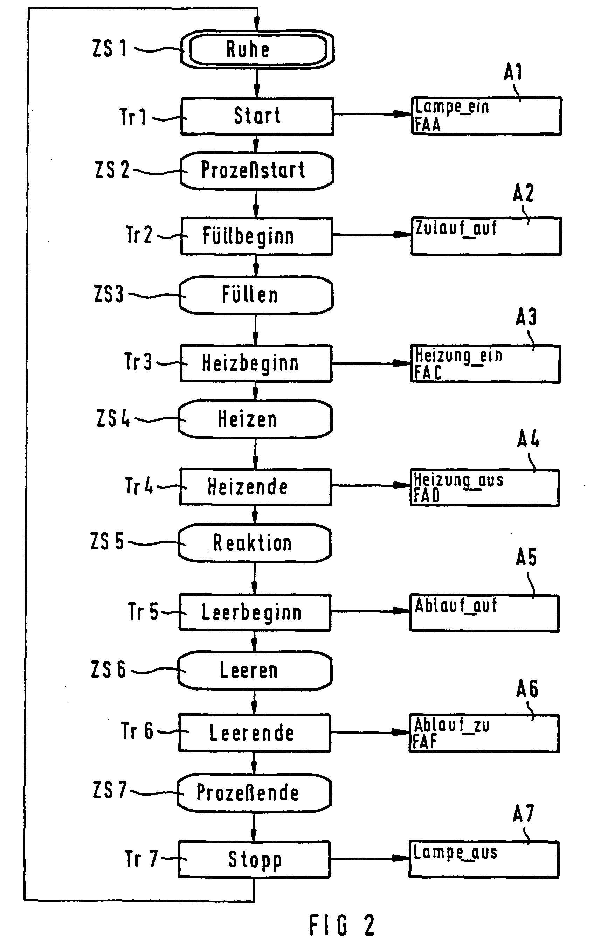

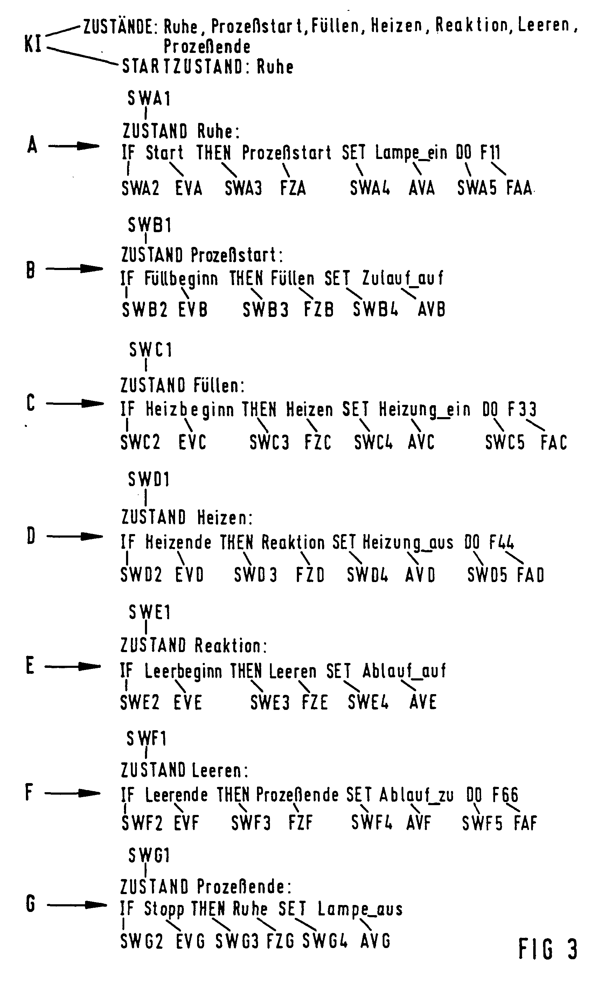

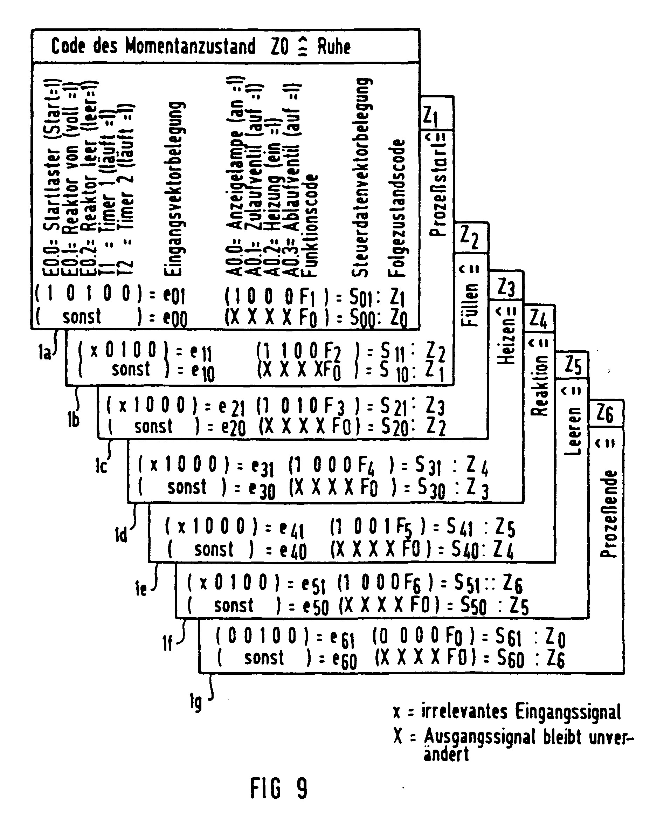

Diese derart formulierte Steueraufgabe setzt ein Programmierer mit einem hier nicht dargestellten Programmiergerät in einen Zustandsgraphen (Figur 2) um. Das mit einer Anzeigevorrichtung und einem Speicher versehene Programmiergerät weist dazu ein Software-Werkzeug auf, das in dem Speicher hinterlegt ist und auch Anweisungen und Befehle zur Darstellung des Zustandsgraphen auf der Anzeigevorrichtung beinhaltet. Das Software-Werkzeug wandelt weiterhin diesen Zustandsgraphen in einen strukturierten Text gemäß Figur 3 um.
Zur Erläuterung der Art und Weise der Weiterbearbeitung wird zunächst auf Figur 9 verwiesen. Die Figur zeigt ein Steuerungsprogramm in Form einer ebenfalls auf der Anzeigevorrichtung darstellbaren Steuertabelle, welche ein weiteres Software-Werkzeug, wie im folgenden noch gezeigt wird, aus dem strukturierten Text erzeugt. Selbstverständlich ist es möglich, lediglich ein Software-Werkzeug vorzusehen, welches sowohl zur Erstellung des Zustandsgraphen, zur Umwandlung des Zustandsgraphen in einen strukturierten Text als auch zur Erstellung einer Steuertabelle aus dem strukturierten Text geeignet ist. Zur besseren Übersicht ist die Steuertabelle in Blöcke 1a ... 1g unterteilt, von denen jeder Block einem Zustand Z0 ... Z6 zugeordnet und in entsprechenden Speicherbereichen des Speichers hinterlegt ist. Es bedeuten Z0 ... Z6 die Codes der Zustände "Ruhe", "Prozeßstart", "Füllen", "Heizen", "Reaktion", "Leeren" und "Prozeßende", eᵢⱼ Eingangsvektorbelegungen, die aus den Binärwerten der Eingangssignale E0.0 ... und internen Signalen T1, T2 der Zustandssteuerung 9 gebildet werden, und Sᵢⱼ aus den Binärwerten der Ausgangssignale A0.0 ... und Funktionscodes F0 ... F6 gebildete Steuerdatenvektorbelegungen, wobei i = 0, 1 ... 6; j = 0, 1 ist. Weiterhin bedeutet das Zeichen x, daß der diesem Zeichen zugeordnete Binärwert eines Eingangssignals E0.0 ... irrelevant ist, d. h., unabhängig vom Binärwert dieses Eingangssignals wird der entsprechende Eingangs- und Steuerdatenvektor gebildet. Das Zeichen X in der Steuerdatenvektorbelegung besagt, daß die Binärwerte der Ausgangssignale A0.0 ... bei entsprechenden Eingangsvektorbelegungen unverändert bleiben.

Im Ausführungsbeispiel ist eine Zustandsgraphik mit Symbolen für Zustände sowie Eingangs- und Ausgangstransitionen dargestellt (Figur 2). Die Zustandssymbole sind gekennzeichnet durch abgerundete Rechtecke ZS1 ... ZS7 und diesen zugeordnete Zeichenfolgen ("Ruhe", "Prozeßstart", ...), welche entsprechend den Vorgaben der Steueraufgabe (Figur 1, Beschreibung) die Zustände "Ruhe", "Prozeßstart", "Füllen (des Reaktors)", "Heizen (der Reaktorflüssigkeit)", "Leeren (des Reaktors)" und "Prozeßende" bedeuten. Als Startzustand ist der Zustand "Ruhe" vorgesehen, welcher im Symbol durch eine zweifach gezeichnete Umrandung gekennzeichnet ist. Zwischen den Zustandssymbolen ZS1 ... ZS7 sind Symbole Tr1 ... Tr7 für die Eingangstransitionen gezeichnet. Im vorliegenden Beispiel führt von einem Zustand lediglich eine gerichtete Linie zu einer Eingangstransition, was sich aufgrund der Vorgaben der Steueraufgabe ergibt. Selbstverständlich ist es möglich, daß zur Lösung komplexer Steueraufgaben ein Zustandsgraph erforderlich ist, welcher eine gerichtete Linie enthält, die ausgehend von einem Zustandssymbol sich verzweigt und in mehrere Eingangstransitionssymbole mündet. Vom Startzustand "Ruhe" führt eine Linie zu einer Eingangstransition Tr1 mit einer Zeichenfolge "Start", von welcher eine weitere gerichtete Linie zum Folgezustand "Prozeßstart" und eine weitere gerichtete Linie zu einem Aktionssymbol A1 führt. Die Zeichenfolge "Start" kennzeichnet einen Eingangsvektor, auf dessen Bitbelegung im folgenden noch näher eingegangen wird. Entsprechend den Vorgaben des Steuerprogramms sind weitere Eingangstransitionen mit zugeordneten Zeichenfolgen "Füllbeginn", "Heizbeginn", ... "Stopp" als Symbole in Form von Rechtecken Tr2, Tr3 ... Tr7 dargestellt. Jeweils ausgehend von einem Zustandssymbol ZS1 ... ZS7 führt jeweils eine gerichtete Linie zu diesen Transitionen Tr1 ... Tr7, von denen jeweils wiederum eine gerichtete Linie zu einem Zustandssymbol und entsprechend den Vorgaben des Steuerprogramms eine gerichtete Linie zu einem Aktionssymbol A1 ... A7 führt. In diesen Symbolen A1 ... A7 sind Zeichenfolgen eingeschrieben, welche - wie im folgenden noch gezeigt wird - Ausgangsgrößen sowie Funktionsaufrufe beschreiben. Das Aktionssymbol A1 beinhaltet eine Ausgangsgröße in Form einer Zeichenfolge "Lampe_ein", Aktionssymbol A2 die Ausgangsgröße "Zulauf_auf", das Aktionssymbol A3 die Ausgangsgröße "Heizung_ein", das Aktionssymbol A4 die Ausgangsgröße "Heizung_aus", das Aktionssymbol A5 die Ausgangsgröße "Ablauf_auf (offen)", das Aktionssymbol A6 die Ausgangsgröße "Ablauf_zu" und das Aktionssymbol A7 die Ausgangsgröße "Lampe_aus". Als weitere Ausgangsgrößen sind in den Aktionssymbolen A1, A3, A4, A6 und A7 Funktionsaufrufe FAA, FAC, FAD und FAF dargestellt, welche - wie im folgenden noch gezeigt wird- die Prozeßzeiten der Steueraufgabe nach Maßgabe von Zeitschaltereinstellungen der Zustandssteuerung 9 (Figur 1) festlegen. Diese bilden interne binäre Eingangssignale T1, T2, die entsprechend den in der Steueraufgabe beschriebenen Vorgaben die Heiz- und Reaktionszeit sowie die Verzögerungszeiten im Hinblick auf das Öffnen des Zulaufventils 5 und das Ausschalten der Lampe 8 steuern.
Die Weiterverarbeitung des Zustandsgraphen (Figur 2) zum Erstellen eines strukturierten Textes (Figur 3) durch das Software-Werkzeug wird im folgenden näher erläutert.
Das Software-Werkzeug erzeugt aus den sieben Zustandssymbolen ZS1 ... ZS7 einen strukturierten Text mit sieben Teilstrukturen A ... G (Figur 3), welche jeweils einem Zustand zugeordnet sind. Die Zustände sind in Form von Zeichenfolgen in einer Kopfinformation KI hinterlegt und umfassen entsprechend den Kennzeichnungen (Zeichenfolgen) der Zustandssymbole die Zustände "Prozeßstart", "Füllen (des Reaktors)", "Heizen (der Reaktor-Flüssigkeit)", "Leeren (des Reaktors)" und "Prozeßende". Als Startzustand ist im Zustandsgraphen der Zustand "Ruhe" gekennzeichnet, welcher ebenfalls in der Kopfinformation hinterlegt ist. Das Software-Werkzeug erstellt aus dem Momentanzustandssymbol "Ruhe" (Figur 2) ein erstes Schlüsselwort SWA1 (Teilstruktur A, Figur 3) in Form der Zeichenfolge "Zustand", dem eine einen Momentanzustand kennzeichnende Zeichenfolge "Ruhe" zugeordnet ist. Aus dem Eingangstransitionssymbol Tr1 und der diesem Symbol zugeordneten Zeichenfolge "Start", dem Aktionssymbol A1 und der diesem Symbol zugeordneten Zeichenfolge "Lampe_ein" sowie aus dem Symbol Z2 des Folgezustands und der Zeichenfolge "Prozeßstart" bildet das Software-Werkzeug eine Gruppe aus geordneten Paaren, die jeweils aus einem Schlüsselwort und einer Zeichenfolge bestehen. Ein erstes Paar dieser Gruppe umfaßt ein zweites Schlüsselwort SWA2 (Zeichenfolge "IF") und einen Eingangsvektor EVA in Form einer Zeichenfolge "Start". Ein zweites Paar schließt sich diesem Eingangsvektor EVA an und ist mit einem dritten Schlüsselwort SWA3 (Zeichenfolge "THEN") und einem durch eine Zeichenfolge "Prozeßstart" gekennzeichneten Folgezustand FZA versehen. Ein dem Folgezustand FZA nachgeordnetes drittes Paar umfaßt ein viertes Schlüsselwort SWA4 (Zeichenfolge "SET") und einen Ausgangsvektor AVA in Form einer Zeichenfolge "Lampe_ein". Aus dem Funktionsaufruf FAA bildet das Software-Werkzeug ein viertes Paar mit einem fünften Schlüsselwort SWA5 (Zeichenfolge "DO") und dem Funktionsaufruf FAA (Zeichenfolge "F11"). Dieses vierte Paar folgt dem Ausgangsvektor AVA.
In der gleichen Art und Weise sind entsprechend den Vorgaben des Zustandsgraphen die Teilstrukturen B ... G formuliert, wobei SWxy (x = B, C, ... G; y = 1, 2, ...) die ersten, zweiten usw. Schlüsselworte, EVk und AVk die Ein- und Ausgangsvektoren, FZk die Folgezustände und FAk (k = B, C, ... G) die Funktionsaufrufe dieser Teilstrukturen B, C, ... G bedeuten. Dabei berücksichtigt das Software-Werkzeug, daß für die Teilstrukturen B, E und G kein fünftes Schlüsselwort und kein Funktionsaufruf benötigt wird, da in den entsprechenden Aktionssymbolen A2, A5 und A7 keine Einträge in Form von Funktionsaufrufen eingetragen sind.

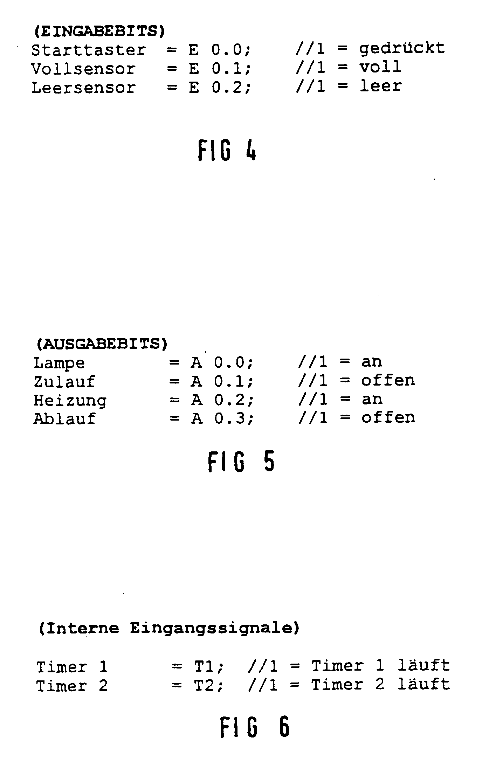

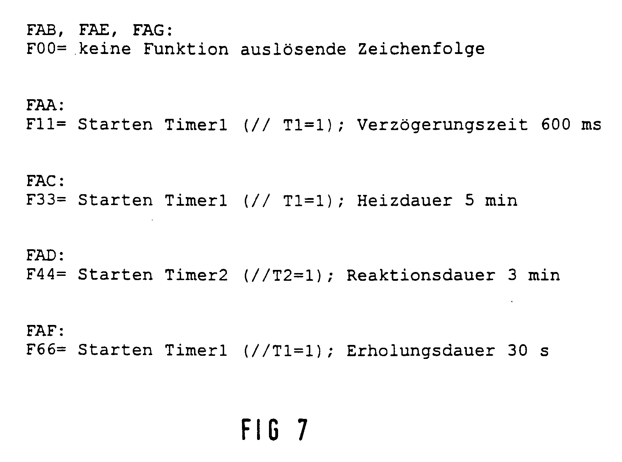

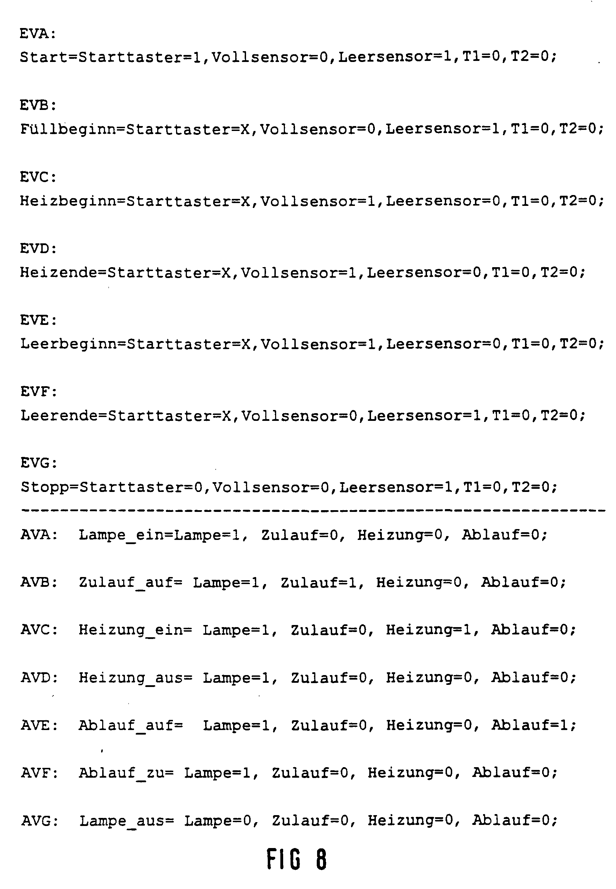

Da im vorliegenden Beispiel im Zustandsgraphen keine Angaben über die Belegungen der Ein- und Ausgangsvektoren als auch über die der Ein- und Ausgangssignale gemacht sind, ist es zur Umsetzung des strukturierten Textes in eine Steuertabelle (Figur 9) noch erforderlich, diese Belegungen gemäß den Vorgaben der Steueraufgabe vorzugeben. Es wird festgelegt, daß eine gedrückte Starttaste 4 (Figur 1) durch einen Binärwert 1 (Eingangssignal E0.0 = 1) angezeigt wird. Entsprechend bedeuten E0.1 = 1 bzw. E0.2 = 1 "Der Reaktor ist voll bzw. leer" (Figur 4). Weiterhin wird die Belegung der Ausgangssignale definiert zu A0.0 = 1, falls die Lampe 8 angeschaltet, A0.1 = 1, falls der Zulauf 5 offen (bzw. geöffnet werden soll), A0.2 = 1, falls die Heizung 7 eingeschaltet, und A0.3 = 1, falls das Ablaufventil 6 offen ist bzw. geöffnet werden soll (Figur 5). Zusätzlich sind - wie bereits bemerkt - im vorliegenden Beispiel als weitere Ausgangsgrößen die Funktionsaufrufe in Form der Zeichenfolgen F00 ... F66 von Bedeutung, welche die Prozeßzeiten der Steueraufgabe nach Maßgabe von Zeitschaltereinstellungen der Zustandssteuerung 9 (Figur 1) festlegen. Die Belegung der internen Eingangssignale T1, T2 und der Funktionsaufrufe in Form der Zeichenfolgen F00 ... F66 ist in Figur 6 und 7 dargestellt.
Aufgrund dieser Festlegung in den Belegungstabellen gemäß Figuren 4 bis 7 und den Vorgaben der Steueraufgabe weiß nun der Programmierer, welche Belegungen (Pegel) der Ein- und Ausgangssignale E0.0, E0.1, E0.2 und A0.0, A0.1, A0.2 relevant sind, und er weiß ferner, welche Folgezustände beim Anlegen der relevanten Eingangssignale, ausgehend von einem Momentanzustand, erreicht und welche Ausgangssignale dann ausgegeben werden müssen, um die Steueraufgabe zu lösen. Entsprechend dieser Kenntnis sind die Ein- und Ausgangsvektoren EVk und AVk (k = A, B, ... G) gemäß Figur 8 zu belegen und schließlich die Teilstrukturen A ... G gemäß Figur 3 zu formulieren.

Auf die Belegungstabellen gemäß den Figuren 4 bis 8 kann selbstverständlich dann verzichtet werden, falls anstatt den Zeichenfolgen "Start", "Füllbeginn", ...; "Lampe_ein", "Zulauf_auf", ... für die Ein- und Ausgangsvektoren EVk, AVk, die Ein- und Ausgabesignale sowie für die Funktionsaufrufe (FAk, ...) die in den Figuren 4 bis 8 dargestellten Belegungen direkt in die Symbole der Zustände ZS1, ... ZS7, der Einund Ausgangstransitionen Tr1, ... Tr7; A1, ... A7 eingetragen werden. Dies hat den Vorteil, daß die Steuertabelle gemäß Figur 9 direkt aus dem Zustandsgraphen durch das Software-Werkzeug erzeugbar ist. Zur besseren Übersicht des Programms ist es aber von Vorteil, lediglich die entsprechenden Zeichenfolgen einzutragen und die Belegungen in einer separaten Liste entsprechend den Figuren 4 bis 8 zu formulieren. Auch ist es möglich, lediglich einen Teil der Belegungen in die Symbole des Zustandsgraphen einzutragen, z. B. die Ausgabebits gemäß Figur 5 in die Aktionssymbole A1, ... A7, die restlichen Belegungen dagegen in die dafür vorgesehenen Belegungslisten gemäß den Figuren 7 und 8. Die dafür vorgesehenen Zeichenfolgen ("Start", "Füllen", ...) dieser Transitionen sind in diesem Fall in die Symbole der entsprechenden Transitionen TR1, ... Tr7 einzutragen.

Ist die Umsetzung der Steueraufgabe in Form des beschriebenen strukturierten Textes abgeschlossen, erzeugt das Software-Werkzeug die Steuertabelle gemäß Figur 9. Dazu erzeugt das Software-Werkzeug zunächst aus dem ersten Schlüsselwort SWA1 und der ersten Zeichenfolge "Ruhe" der Teilstruktur A den zugeordneten Momentanzustand in codierter Form Z0 (Figur 9, Bereich 1a) und schließlich aus dem ersten geordneten Paar, bestehend aus dem zweiten Schlüsselwort SWA2 (Zeichenfolge "IF") und dem Eingangsvektor EVA (Zeichenfolge "Start"), unter Berücksichtigung der Belegung der Zeichenfolge "Start" (Figur 8), der Binärwertvorgabe der Ein- und der internen Eingangssignale (Figur 4 und 6) die Eingangsvektorbelegung in codierter Form zu e01 = (10100). Aufgrund des zweiten Paares, bestehend aus drittem Schlüsselwort SWA3 (Zeichenfolge "THEN") und Zeichenfolge "Prozeßstart", erstellt das Software-Werkzeug den Code Z1 des Folgezustands. Aus dem vierten Schlüsselwort SWA4 (Zeichenfolge "SET") und Ausgangsvektor AVA (Zeichenfolge "Lampe") sowie aus fünftem Schlüsselwort SWA5 (Zeichenfolge "DO") und Funktionsaufruf FAA (Zeichenfolge "F11") erzeugt das Software-Werkzeug unter Berücksichtigung der Belegung der Zeichenfolge "Lampe_ein" (Figur 8), der Zeichenfolge F11 (Figur 7) und der Binärwertvorgabe der Ausgabesignale (Figur 5) den Code für die Steuerdatenvektorbelegung zu S01 = (1000F1), wobei F1 einen Funktionscode darstellt, welcher aus der Zeichenfolge F11 gebildet wird. Damit ist die Codierung (Kompilierung) der Teilstruktur A des strukturierten Textes im Hinblick auf einen Zustandswechsel von dem Momentanzustand "Ruhe" in einen Folgezustand "Prozeßstart" für den Fall, daß die Belegung die Form 10100 (= e01) aufweist, abgeschlossen (vergleiche Bereich 1a, Figur 9). In der Teilstruktur A sind keine weiteren Zeichenfolgen vorhanden, was bedeutet, daß für alle anderen möglichen Belegungen des Eingangsvektors kein Zustandswechsel vorgesehen ist, und das Software-Werkzeug erstellt automatisch eine weitere Codezeile im Bereich 1a der Steuertabelle, und zwar eine Eingangsvektorbelegung e00 und eine Steuerdatenvektorbelegung S00, welche einem dem Momentanzustand entsprechenden Folgezustandscode Z0 zugeordnet sind.
Im Steuerbetrieb der speicherprogrammierbaren Zustandssteuerung verursachen die beschriebenen Codezeilen im Bereich 1a der Steuertabelle, daß, ausgehend vom Momentanzustand "Ruhe" (Code Z0), nur dann in den Folgezustand "Prozeßstart" (Code Z1) gewechselt wird, falls der reale aus den aktuell anliegenden Eingangssignalen E0.0, E0.1, E0.2 und den internen Signalen T1, T2 der Zustandssteuerung 9 (Figur 1) gebildete Vektor die Belegung (10100) aufweist, also der vorgegebenen Eingangsvektorbelegung e01 entspricht. Außerdem wird nur für diesen Fall der Steuerdatenvektor S01 = (1000F1) ausgegeben. Die Steuerung bleibt für alle anderen aktuellen Eingangssignale im Momentanzustand "Ruhe" (in Figur 9 durch die Zeichenfolge "sonst" dargestellt).
In der gleichen beschriebenen Art und Weise erzeugt das Software-Werkzeug aus den Teilstrukturen B ... G die Codezeilen in den Bereichen 1b ... 1g der Steuertabelle. In den Teilstrukturen B, E und G fehlt jeweils ein fünftes Schlüsselwort SW5k und ein Funktionsaufruf FAk (k = B, E, G). Dadurch erzeugt das Software-Werkzeug einen Funktionscode F0 für die Steuerdatenvektorbelegungen S11, S41 und S61. Dieser Code ist ohne Bedeutung während des Steuerbetriebs der Zustandssteuerung und bildet keinen Funktionen auslösenden Funktionsaufruf.

Die somit erzeugte Steuertabelle wird in die speicherprogammierbare Zustandssteuerung übertragen, die entsprechend den Vorgaben dieser Tabelle die Steueraufgabe entsprechend der DE-OS 42 26 456 bzw. der DE-OS 37 43 438 löst. Die Übertragung kann dadurch bewirkt werden, daß die Steuertabelle aus dem Speicher des Programmiergeräts ausgelesen, auf eine Diskette oder ein Speichermodul geschrieben und von dort in den Anwenderspeicher der Zustandssteuerung übertragen wird. Die Übertragung kann selbstverständlich auch online über eine geeignete Verbindung des Programmiergeräts mit der Zustandssteuerung erfolgen. Das Software-Werkzeug ist vorteilhaft so ausgebildet, daß sowohl aus einer vorgegebenen Steuertabelle der dazugehörige strukturierte Text als auch aus dem strukturierten Text der dazugehörige Zustandsgraph erzeugt werden kann, da sowohl alle Informationen des strukturierten Textes umkehrbar eindeutig in der Steuertabelle als auch alle Informationen des Zustandsgraphen umkehrbar eindeutig in dem strukturierten Text abgebildet werden.

## Patentansprüche

1. Verfahren zum Programmieren einer speicherprogrammierbare Zustandssteuerung (9) mit einem Programmiergerät, welches eine Anzeigevorrichtung und einen Speicher aufweist, in dem eine mit einem Software-Werkzeug erstellte Steueraufgabe in Form eines auf der Anzeigevorrichtung darstellbaren Zustandsgraphen hinterlegt ist, welcher Symbole für Zustände, Eingangs- und Ausgangstransitionen aufweist,
**dadurch gekennzeichnet,**
**dass** aus dem Zustandsgraphen durch das Software-Werkzeug ein strukturiert Text mit mehreren Teilstrukturen (A, B, ... G) erzeugbar ist, derart, dass das Software-Werkzeug erzeugt:
- aus dem Symbol (ZS1, ... ZS7) eines Zustandes und einer diesem Symbol zugeordneten Zeichenfolge ein erstes Schlüsselwort (SWk1, k = A, B, ... G) und eine diesem Schlüsselwort folgende, einen Zustand kennzeichnende erste Zeichenfolge ("Ruhe", "Prozessstart", ...),
- aus einem Symbol (Tr1, ... Tr7) einer Eingangstransition und einer diesem Symbol zugeordneten Zeichenfolge ein dieser ersten Zeichenfolge nachgeordnetes zweites Schlüsselwort (SWk2, k = A, B, ... G) und eine diesem Schlüsselwort folgende, einen Eingangsvektor kennzeichnende zweite Zeichenfolge (EVk, k = A, B, ... G),
- aus einem Symbol (ZS1, ... ZS7) eines Folgezustands und einer diesem Symbol zugeordneten Zeichenfolge ein dieser zweiten Zeichenfolge nachgeordnetes drittes Schlüsselwort (SWk3, k = A, B, ... G) und eine diesem Schlüsselwort folgende, einen Folgezustand kennzeichnende dritte Zeichenfolge (FZk, k = A, B, ... G) und
- aus einem Aktionssymbol (A1, ... A7) einer Ausgangstransition und einer diesem Symbol zugeordneten Zeichenfolge ein dieser dritten Zeichenfolge nachgeordnetes viertes Schlüsselwort (SWk4, k = A, B, ... G) und eine diesem Schlüsselwort folgende, einen Ausgangsvektor kennzeichnende vierte Zeichenfolge (AVk, k = A, B, ... G).

2. Verfahren nach Anspruch 1, **dadurch gekennzeichnet, dass** das Software-Werkzeug aus einer weiteren dem Aktionssymbol (A1, ... A7) zugeordneten Zeichenfolge ein der vierten Zeichenfolge nachgeordnetes fünftes Schlüsselwort (SW5k, k = A, B, ...) und einen diesem Schlüsselwort folgenden Funktionsaufruf (FAk, k = A, B, ...) erzeugt.

3. Verfahren nach Anspruch 1 oder 2, **dadurch gekennzeichnet, dass**
- die Symbole mit gerichteten Linien miteinander verbunden sind,
- eine von einem Zustandssymbol (ZS1, ... ZS7) ausgehende erste Linie in mindestens ein Eingangstransitionssymbol (Tr1, ... Tr7) mündet,
- eine von einem Eingangstransitionssymbol (Tr1, ... Tr7) ausgehende zweite Linie in mindestens ein Zustandssymbol (ZS1, ... ZS7) mündet und
- eine von einem Eingangstransitionssymbol (Tr1, ... Tr7) ausgehende dritte Linie in ein Aktionssymbol (A1, ... A7) mündet.

4. Verfahren nach einem der Ansprüche 1 bis 3, **dadurch gekennzeichnet, dass** die Symbole unterschiedlich auf der Anzeigevorrichtung darstellbar sind.

5. Programmiergerät zum Programmieren einer speicherprogrammierbaren Zustandssteuerung (9), mit einer Anzeigevorrichtung und mit einem Speicher, in dem eine mit einem Software-Werkzeug erstellte Steueraufgabe in Form eines auf der Anzeigevorrichtung darstellbaren Zustandsgraphen hinterlegt ist, welcher Symbole für Zustände, Eingangs- und Ausgangstransitionen aufweist,
**dadurch gekennzeichnet,**
**dass** aus dem Zustandsgraphen durch das Software-Werkzeug ein strukturierter Text mit mehreren Teilstrukturen (A, B, ... G) erzeugbar ist, derart, dass das Software-Werkzeug erzeugt:
- aus dem Symbol (ZS1, ... ZS7) eines Zustandes und einer diesem Symbol zugeordneten Zeichenfolge ein erstes Schlüsselwort (SWk1, k = A, B, ... G) und eine diesem Schlüsselwort folgende, einen Zustand kennzeichnende erste Zeichenfolge ("Ruhe", "Prozessstart", ...),
- aus einem Symbol (Tr1, ... Tr7) einer Eingangstransition und einer diesem Symbol zugeordneten Zeichenfolge ein dieser ersten Zeichenfolge nachgeordnetes zweites Schlüsselwort (SWk2, k = A, B, ... G) und eine diesem Schlüsselwort folgende, einen Eingangsvektor kennzeichnende zweite Zeichenfolge (EVk, k = A, B, ... G) ,
- aus einem Symbol (ZS1, ... ZS7) eines Folgezustands und einer diesem Symbol zugeordneten Zeichenfolge ein dieser zweiten Zeichenfolge nachgeordnetes drittes Schlüsselwort (SWk3, k = A, B, ... G) und eine diesem Schlüsselwort folgende, einen Folgezustand kennzeichnende dritte Zeichenfolge (FZk, k = A, B, ... G) und
- aus einem Aktionssymbol (A1, ... A7) einer Ausgangstransition und einer diesem Symbol zugeordneten Zeichenfolge ein dieser dritten Zeichenfolge nachgeordnetes viertes Schlüsselwort (SWk4, k = A, B, ... G) und eine diesem Schlüsselwort folgende, einen Ausgangsvektor kennzeichnende vierte Zeichenfolge (AVk, k = A, B, ... G).

6. Programmiergerät nach Anspruch 5, **dadurch gekennzeichnet, dass** das Software-Werkzeug aus einer weiteren dem Aktionssymbol (A1, ... A7) zugeordneten Zeichenfolge ein der vierten Zeichenfolge nachgeordnetes fünftes Schlüsselwort (SW5k, k = A, B, ...) und einen diesem Schlüsselwort folgenden Funktionsaufruf (FAk, k = A, B, ...) erzeugt.

7. Programmiergerät nach Anspruch 5 oder 6, **dadurch gekennzeichnet, dass** das Software-Werkzeug die Steueraufgabe in einen Zustandsgraphen umsetzt, derart, dass
- die Symbole mit gerichteten Linien miteinander verbunden sind,
- eine von einem Zustandssymbol (ZS1, ... ZS7) ausgehende erste Linie in mindestens ein Eingangstransitionssymbol (Tr1, ... Tr7) mündet,
- eine von einem Eingangstransitionssymbol (Tr1, ... Tr7) ausgehende zweite Linie in mindestens ein Zustandssymbol (ZS1, ... ZS7) mündet und
- eine von einem Eingangstransitionssymbol (Tr1, ... Tr7) ausgehende dritte Linie in ein Aktionssymbol (A1, ... A7) mündet.

8. Programmiergerät nach einem der Ansprüche 5 bis 7, **dadurch gekennzeichnet, dass** durch das Software-Werkzeug die Symbole unterschiedlich auf der Anzeigevorrichtung darstellbar sind.

## Claims

1. Method for programming a memory-programmable status control unit (9) with a programming device, which has a display device and a memory, in which a control task, constructed by a software tool, is deposited in the form of a status graph which can be represented on the display device and which has symbols for statuses and input and output transitions, **characterised in that** from the status graph a structured text with several partial structures (A, B, ... G) can be generated by the software tool in such a way that the software tool generates:
- from the symbol (ZS1, ... ZS7) of a status and a character string allocated to this symbol a first key word (SWk1, k = A, B, ... G) and a first character string ("rest", "process start", ...) following this key word and characterising a status,
- from a symbol (Tr1, ...Tr7) of an input transition and a character string allocated to this symbol a second key word (SWk2, k = A, B, ... G) arranged after this first character string and a second character string (EVk, k = A, B, ... G) following this key word and characterising an input vector,
- from a symbol (ZS1, ... ZS7) of a subsequent status and a character string allocated to this symbol a third key word (SWk3, k = A, B, ... G) arranged after this second character string and a third character string (FZk, k = A, B, ... G) following this key word and characterising a subsequent status and
- from an action symbol (A1, ... A7) of an output transition and a character string allocated to this symbol a fourth key word (SWk4, k = A, B, ... G) 'arranged after this third character string and a fourth character string (AVk, k = A, B, ... G) following this key word and characterising an output vector.

2. Method according to claim 1, **characterised in that** the software tool generates from a further character string allocated to the action symbol (A1 ... A7) a fifth key word (SWk5, k = A, B, ...) arranged after the fourth character string and a function invocation (FAk, k = A, B, ...) following this key word.

3. Method according to claim 1 or 2, **characterised in that**
- the symbols are connected to one another by directional lines,
- a first line starting from a status symbol (ZS1, ... ZS7) runs into at least one input transition symbol (Tr1, ... Tr7),
- a second line starting from an input transition symbol (Tr1, ... Tr7) runs into at least one status symbol (ZS1, ... ZS7) and
- a third line starting from an input transition symbol (Tr1, ... Tr7) runs into an action symbol (A1, ... A7).

4. Method according to one of claims 1 to 3, **characterised in that** the symbols can be represented differently on the display device.

5. Programming device for programming a memory-programmable status control unit (9), with a display device and with a memory in which a control task, constructed with a software tool, is deposited in the form of a status graph which can be represented on the display device and has symbols for statuses and input and output transitions, **characterised in that** from the status graph a structured text with several partial structures (A, B, ... G) can be generated by means of the software tool in such a way that the software tool generates:
- from the symbol (ZS1, ... Zs7) of a status and a character string allocated to this symbol a first key word (SWk1, k = A, B, ... G) and a first character string ("rest", "process start", ...) following this key word and characterising a status,
- from a symbol (Tr1, ...Tr7) of an input transition and a character string allocated to this symbol a second key word (SWk2, k = A, B, ... G) arranged after this first character string and a second character string (EVk, k = A, B, ... G) following this key word and characterising an input vector,
- from a symbol (ZS1, ... ZS7) of a subsequent status and a character string allocated to this symbol a third key word (SWk3, k = A, B, ... G) arranged after this second character string and a third character string (FZk, k = A, B, ... G) following this key word and characterising a subsequent status and
- from an action symbol (A1, ... A7) of an output transition and a character string allocated to this symbol a fourth key word (SWk4, k = A, B, ... G) arranged after this third character string and a fourth character string (AVk, k = A, B, ... G) following this key word and characterising an output vector.

6. Programming device according to claim 5, **characterised in that** the software tool generates from a further character string allocated to the action symbol (A1, ... A7) a fifth key word (SWk5, k = A, B, ...) arranged after the fourth character string and a function invocation (FAk, k = A, B, ...) following this key word.

7. Programming device according to claim 5 or 6, **characterised in that** the software tool converts the control task into a status graph in such a way that
- the symbols are connected to one another by directional lines,
- a first line starting from a status symbol (ZS1, ... ZS7) runs into at least one input transition symbol (Tr1, ... Tr7),
- a second line starting from an input transition symbol (Tr1, ... Tr7) runs into at least one status symbol (ZS1, ... ZS7) and
- a third line starting from an input transition symbol (Tr1, ... Tr7) runs into an action symbol (A1, ... A7).

8. Programming device according to one of claims 5 to 7, **characterised in that** the symbols can be represented differently on the display device by the software tool.

## Revendications

1. Procédé pour la programmation d'une commande d'états programmable en mémoire (9) comprenant un appareil de programmation qui comporte un dispositif d'affichage et une mémoire dans laquelle une tâche de commande élaborée par un outil logiciel est mémorisée sous la forme d'un graphe d'états qui peut être représenté sur le dispositif d'affichage et qui comporte des symboles pour des états et pour des transitions d'entrée et de sortie,
**caractérisé par le fait que**, à partir du graphe d'états, l'outil logiciel peut produire un texte structuré ayant plusieurs sous-structures (A, B, ..., G) de telle sorte que l'outil logiciel produit :
- à partir du symbole (ZS1 à ZS7) d'un état et à partir d'une chaîne de caractères associée à ce symbole un premier mot clé (SWk1, k = A, B, ..., G) et une première chaîne de caractères ("repos", "démarrage de processus", ...) qui suit ce mot clé et qui caractérise un état,
- à partir d'un symbole (Tr1 à Tr7) d'une transition d'entrée et à partir d'une chaîne de caractères associée à ce symbole un deuxième mot clé (SWk2, k = A, B, ..., G) qui suit cette première chaîne de caractères et une deuxième chaîne de caractères (EVk, k = A, B, ..., G) qui suit ce mot clé et qui caractérise un vecteur d'entrée,
- à partir d'un symbole (ZS1 à ZS7) d'un état suivant et à partir d'une chaîne de caractères associée à ce symbole un troisième mot clé (SWk3, k = A, B, ..., G) qui suit cette deuxième chaîne de caractères et une troisième chaîne de caractères (FZk, k = A, B, ..., G) qui suit ce mot clé et qui caractérise un état suivant, et
- à partir d'un symbole d'action (A1 à A7) d'une transition de sortie et à partir d'une chaîne de caractères associée à ce symbole un quatrième mot clé (SWk4, k = A, B, ..., G) qui suit cette troisième chaîne de caractères et une quatrième chaîne de caractères (AVk, k = A, B, ..., G) qui suit ce mot clé et qui caractérise un vecteur de sortie.

2. Procédé selon la revendication 1, **caractérisé par le fait que** l'outil logiciel produit à partir d'une autre chaîne de caractères associée au symbole d'action (A1 à A7) un cinquième mot clé (SWk5, k = A, B, ...) qui suit la quatrième chaîne de caractères et un appel de fonction (FAk, k = A, B, ...) qui suit ce mot clé.

3. Procédé selon la revendication 1 ou 2, **caractérisé par le fait que**
- les symboles sont reliés entre eux avec des lignes orientées,
- une première ligne partant d'un symbole d'état (ZS1 à ZS7) débouche dans au moins un symbole de transition d'état (Tr1 à Tr7),
- une deuxième ligne partant d'un symbole de transition d'entrée (Tr1 à Tr7) débouche dans au moins un symbole d'état (ZS1 à ZS7), et
- une troisième ligne partant d'un symbole de transition d'entrée (Tr1 à Tr7) débouche dans un symbole d'action (A1 à A7).

4. Procédé selon l'une des revendications 1 à 3, **caractérisé par le fait que** les symboles peuvent être représentés différemment sur le dispositif d'affichage.

5. Appareil de programmation pour la programmation d'une commande d'états programmable en mémoire (9) comprenant un appareil de programmation qui comporte un dispositif d'affichage et une mémoire dans laquelle une tâche de commande élaborée par un outil logiciel est mémorisée sous la forme d'un graphe d'états qui peut être représenté sur le dispositif d'affichage et qui comporte des symboles pour des états et pour des transitions d'entrée et de sortie,
**caractérisé par le fait que**, à partir du graphe d'états, l'outil logiciel peut produire un texte structuré avec plusieurs sous-structures (A, B, ..., G) de telle sorte que l'outil logiciel produit :
- à partir du symbole (ZS1 à ZS7) d'un état et à partir d'une chaîne de caractères associée à ce symbole un premier mot clé (SWk1, k = A, B, ..., G) et une première chaîne de caractères ("repos", "démarrage de processus", ...) qui suit ce mot clé et qui caractérise un état,
- à partir d'un symbole (Tr1 à Tr7) d'une transition d'entrée et à partir d'une chaîne de caractères associée à ce symbole un deuxième mot clé (SWk2, k = A, B, ..., G) qui suit cette première chaîne de caractères et une deuxième chaîne de caractères (EVk, k = A, B, ..., G) qui suit ce mot clé et qui caractérise un vecteur d'entrée,
- à partir d'un symbole (ZS1 à ZS7) d'un état suivant et à partir d'une chaîne de caractères associée à ce symbole un troisième mot clé (SWk3, k = A, B, ..., G) qui suit cette deuxième chaîne de caractères et une troisième chaîne de caractères (FZk, k = A, B, ..., G) qui suit ce mot clé et qui caractérise un état suivant, et
- à partir d'un symbole d'action (A1 à A7) d'une transition de sortie et à partir d'une chaîne de caractères associée à ce symbole un quatrième mot clé (SWk4, k = A, B, ..., G) qui suit cette troisième chaîne de caractères et une quatrième chaîne de caractères (AVk, k = A, B, ..., G) qui suit ce mot clé et qui caractérise un vecteur de sortie.

6. Appareil de programmation selon la revendication 5, **caractérisé par le fait que** l'outil logiciel produit à partir d'une autre chaîne de caractères associée au symbole d'action (A1 à A7) un cinquième mot clé (SWk5, k = A, B, ...) qui suit la quatrième chaîne de caractères et un appel de fonction (FAk, k = A, B, ...) qui suit ce mot clé.

7. Appareil de programmation selon la revendication 5 ou 6, **caractérisé par le fait que**
- les symboles sont reliés entre eux avec des lignes orientées,
- une première ligne partant d'un symbole d'état (ZS1 à ZS7) débouche dans au moins un symbole de transition d'état (Tr1 à Tr7),
- une deuxième ligne partant d'un symbole de transition d'entrée (Tr1 à Tr7) débouche dans au moins un symbole d'état (ZS1 à ZS7), et
- une troisième ligne partant d'un symbole de transition d'entrée (Tr1 à Tr7) débouche dans un symbole d'action (A1 à A7).

8. Appareil de programmation selon l'une des revendications 5 à 7, **caractérisé par le fait que** les symboles peuvent être représentés différemment sur le dispositif d'affichage par l'outil logiciel.
